# EUROPEAN PATENT APPLICATION

(11) **EP 4 447 597 A1**
(43) Date of publication of application: **16.10.2024**
(21) Application number: 21966861.3
(22) Date of filing: 10.12.2021
(51) Int. Cl.: H04W 74/00, H04W 74/08, H04W 72/04

(54) **METHOD AND APPARATUS FOR DETERMINING RANDOM ACCESS RESOURCE CONFIGURATION, AND DEVICES AND STORAGE MEDIUM**

(71) Applicant: Beijing Xiaomi Mobile Software Co., Ltd., Beijing 100085 (CN)
(72) Inventor: WU, Yumin, Beijing 100085 (CN); LIU, Xiaofei, Beijing 100085 (CN)
(74) Representative: Stöckeler, Ferdinand
(86) International application number: PCT/CN2021/137261
(87) International publication number: WO 2023/102943

(57) **Abstract**

The present disclosure belongs to the technical field of communications. Provided are a method and apparatus for determining a random access resource configuration, and a user equipment, an RIS array, a network-side device and a storage medium. The method comprises: in response to a UE triggering a random access process, determining a usage rule of random access resource configurations; and determining a random access resource configuration on the basis of the determined usage rule, and performing random access on the basis of the determined random access resource configuration. By means of the method for determining a random access resource configuration provided in the present disclosure, a network-side device and a UE can keep a random access resource configuration consistent on the basis of a usage rule, thereby improving the stability of a random access process.

## Description

### TECHNICAL FIELD

The disclosure relates to the field of communication technologies, more particularly, to a method and an apparatus for determining a random access resource configuration.

### BACKGROUND

In a communication system, a network device can provide multiple different random access resource configurations for a user equipment (UE) to perform different random access control on the UE. However, due to the fact that some resource configuration contents in different random access resource configurations may be the same or missing, it is necessary to determine a usage rule of the random access configurations when the UE triggers different random access processes.

### SUMMARY

The disclosure provides a method and an apparatus for determining a random access resource configuration / a storage medium / a device, to provide a method for determining a random access resource configuration.

Embodiments of an aspect of the disclosure provide a method for determining a random access resource configuration, performed by a user equipment (UE). The method includes:
determining a usage rule for random access resource configurations in response to the UE triggering a random access process; and
determining a random access resource configuration based on the usage rule, and performing random access based on the random access resource configuration.

Embodiments of another aspect of the disclosure provide a method for determining a random access resource configuration, performed by a network device. The method includes:
determining a usage rule for random access resource configurations in response to a user equipment (UE) triggering a random access process; and
determining a random access resource configuration based on the usage rule, and performing random access based on the random access resource configuration.

Embodiments of another aspect of the disclosure provide an apparatus for determining a random access resource configuration. The apparatus includes:
a determining module, configured to determine a usage rule for random access resource configurations in response to a user equipment, UE, triggering a random access process; and
a random access module, configured to determine a random access resource configuration based on the usage rule, and perform random access based on the random access resource configuration.

Embodiments of another aspect of the disclosure provide an apparatus for determining a random access resource configuration. The apparatus includes:
a determining module, configured to determine a usage rule for random access resource configurations in response to a user equipment (UE) triggering a random access process; and
a configuring module, configured to determine a random access resource configuration based on the usage rule, and perform random access based on the random access resource configuration.

Embodiments of another aspect of the disclosure provide communication device, including a processor and a memory having a computer program stored thereon. The processor is configured to execute the computer program to cause the communication device to perform the method provided in the embodiments of the aspect of the disclosure.

Embodiments of another aspect of the disclosure provide communication device, including a processor and a memory having a computer program stored thereon. The processor is configured to execute the computer program to cause the communication device to perform the method provided in the embodiments of the above another aspect of the disclosure.

Embodiments of another aspect of the disclosure provide communication device, including a processor and a memory having a computer program stored thereon. The processor is configured to execute the computer program to cause the communication device to perform the method provided in the embodiments of the above another aspect of the disclosure.

Embodiments of another aspect of the disclosure provide communication device, including a processor and an interface circuit.

The interface circuit is configured to receive code instructions and transmit the code instructions to the processor.

The processor is configured to execute the code instructions to perform the method provided in the embodiments of the aspect of the disclosure.

Embodiments of another aspect of the disclosure provide communication device, including a processor and an interface circuit.

The interface circuit is configured to receive code instructions and transmit the code instructions to the processor.

The processor is configured to execute the code instructions to perform the method provided in the embodiments of the above another aspect of the disclosure.

Embodiments of another aspect of the disclosure provide communication device, including a processor and an interface circuit.

The interface circuit is configured to receive code instructions and transmit the code instructions to the processor.

The processor is configured to execute the code instructions to perform the method provided in the embodiments of the above another aspect of the disclosure.

Embodiments of another aspect of the disclosure provide a computer-readable storage medium having instructions stored thereon. When the instructions are executed, the method provided in the embodiments of the aspect of the disclosure is performed.

Embodiments of another aspect of the disclosure provide a computer-readable storage medium having instructions stored thereon. When the instructions are executed, the method provided in the embodiments of the above another aspect of the disclosure is performed.

Embodiments of another aspect of the disclosure provide a computer-readable storage medium having instructions stored thereon. When the instructions are executed, the method provided in the embodiments of the above another aspect of the disclosure is performed.

In summary, in the method and apparatus for determining a random access resource configuration / the storage medium / the device provided in the embodiments of the disclosure, in response to the UE triggering the random access process, the UE may determine the usage rule for random access resource configurations, determine the random access resource configuration based on the determined usage rule, and perform the random access based on the determined random access resource configuration. In this way, in embodiments of the disclosure, the UE may determine a specific random access resource configuration based on the usage rule when triggering different random access processes, and may ensure that a network device and the UE maintain consistent in random access resource configuration based on the usage rule, thereby improving the stability of the random access process.

Additional aspects and advantages of the disclosure will be given in part in the following descriptions, become apparent in part from the following descriptions, or be learned through the practice of the disclosure.

### BRIEF DESCRIPTION OF THE DRAWINGS

The above and/or additional aspects and advantages of the disclosure will become apparent and readily appreciated from the following descriptions made with reference to the drawings, in which:
FIG. 1 is a flowchart of a method for determining a random access resource configuration according to an embodiment of the disclosure.
FIG. 2 is a flowchart of a method for determining a random access resource configuration according to another embodiment of the disclosure.
FIG. 3 is a flowchart of a method for determining a random access resource configuration according to another embodiment of the disclosure.
FIG. 4 is a flowchart of a method for determining a random access resource configuration according to another embodiment of the disclosure.
FIG. 5 is a flowchart of a method for determining a random access resource configuration according to another embodiment of the disclosure.
FIG. 6 is a flowchart of a method for determining a random access resource configuration according to another embodiment of the disclosure.
FIG. 7 is a flowchart of a method for determining a random access resource configuration according to another embodiment of the disclosure.
FIG. 8 is a flowchart of a method for determining a random access resource configuration according to another embodiment of the disclosure.
FIG. 9 is a block diagram of an apparatus for determining a random access resource configuration according to an embodiment of the disclosure.
FIG. 10 is a block diagram of an apparatus for determining a random access resource configuration according to another embodiment of the disclosure.
FIG. 11 is a block diagram of a user equipment according to an embodiment of the disclosure.
FIG. 12 is a block diagram of a network device according to an embodiment of the disclosure.

### DETAILED DESCRIPTION

The example embodiments will be described in detail here, and examples thereof are shown in the accompanying drawings. When the following descriptions are referred to the accompanying drawings, unless otherwise indicated, the same numbers in different drawings represent the same or similar elements. The implementations described in the following example embodiments do not represent all possible implementations consistent with the disclosure. Rather, they are merely examples of apparatuses and methods consistent with some aspects of the disclosure as detailed in the appended claims.

The terms used in embodiments of the disclosure are only for the purpose of describing specific embodiments and are not intended to limit the embodiments of the disclosure. The singular forms "a" and "the" used in the embodiments of the disclosure and the appended claim are also intended to include plural forms, unless the context clearly indicates otherwise. It should also be understood that the term "and/or" used in the disclosure means and includes any or all possible combinations of one or more associated listed items.

It should be understood that, although the terms first, second, third, etc. may be used in embodiments of the disclosure to describe various information, such information shall not be limited to these terms. These terms are only used to distinguish the same type of information. For example, without departing from the scope of the disclosure, first information may also be referred to as second information, and similarly, and the second information may also be referred to as the first information. Depending on the context, for example, the word "if' as used herein may be interpreted as "while" or "when" or "in response to determining".

Reference will be made in detail to embodiments of the disclosure. Examples of the embodiments are illustrated in accompanying drawings, in which the same or similar elements are denoted by same or similar reference numerals throughout the descriptions. The embodiments described with reference to the drawings are explanatory, intended to interpret the disclosure, and are not to be construed as a limitation of the disclosure.

A detailed description is made to a method, a device, a user equipment (UE), a network device, and a storage medium for determining a random access resource configuration provided in this disclosure in the following, with reference to the accompanying drawings.

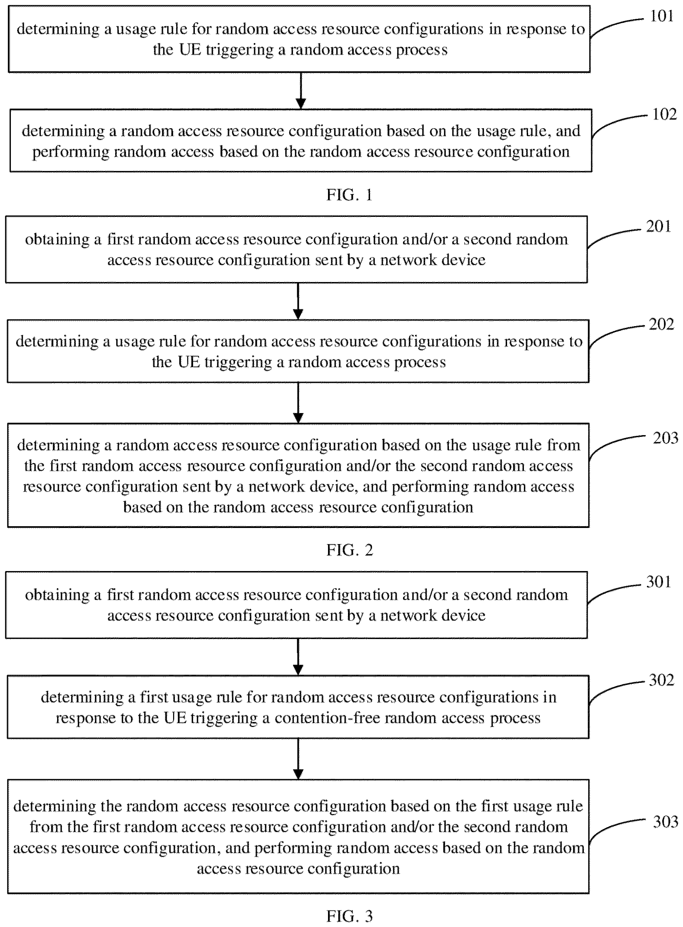

FIG. 1 is a flowchart of a method for determining a random access resource configuration according to an embodiment of the disclosure. The method is performed by a UE. As illustrated in FIG. 1, the method for determining a random access resource configuration includes following steps.

Step 101, a usage rule for random access resource configurations is determined in response to the UE triggering a random access process.

It should be noted that in an embodiment of the disclosure, the UE may be a device that provides voice and/or data connectivity to a user. A terminal device may communicate with one or more core networks through a Radio Access Network (RAN). The UE may be an Internet of Things (IoT) terminal, such as a sensor device, a mobile phone (or a "cellular" phone), and a computer having an IoT terminal. For example, the UE may be a fixed, portable, pocket, handheld, computer built-in, or vehicle mounted device, such as a station (STA), a subscriber unit, a subscriber station, a mobile station, a mobile, a remote station, an access point, a remote terminal, an access terminal, a user terminal or a user agent. Or, the UE may be a device for an unmanned aerial vehicle. Or, the UE may be a vehicle-mounted device, such as a driving computer with a wireless communication function or a wireless terminal externally connected to a driving computer. Or, the UE may be a roadside device, such as a street light, a signal light, or other roadside devices with a wireless communication function.

In an embodiment of the disclosure, the usage rule may be used to determine a random access resource configuration used in a random access process. In an embodiment of the disclosure, the determined usage rule may vary depending on the random access process triggered by the UE.

In an embodiment of the disclosure, when the UE triggers a contention-free random access process, a first usage rule is determined. The first usage rule is used to determine a random access resource configuration in the contention-free random access process.

In another embodiment of the disclosure, when the UE triggers a contention-free random access process, a second usage rule is determined. The second usage rule is used to determine a random access resource configuration in a contention-based random access process.

In an embodiment of the disclosure, the method for the UE to determine the usage rule for random access resource configurations may include at least one of:
determining the usage rule for random access resource configurations based on a network device indication; or
determining the usage rule for random access resource configurations based on a protocol agreement.

Step 102, a random access resource configuration is determined based on the usage rule, and random access is performed based on the random access resource configuration.

In an embodiment of the disclosure, the random access process triggered by UE may be a contention-free random access process, and the first usage rule may be used to determine the random access resource configuration. In another embodiment of the disclosure, the random access process triggered by UE may be a contention-based random access process, and the second usage rule may be used to determine the random access resource configuration.

A detailed introduction of the first usage rule and second usage rule may refer to following embodiments.

In summary, in the method for determining a random access resource configuration provided in the embodiments of the disclosure, in response to the UE triggering the random access process, the UE may determine the usage rule for random access resource configurations, determine the random access resource configuration based on the usage rule, and perform the random access based on the determined random access resource configuration. In this way, in embodiments of the disclosure, the UE may determine a specific random access resource configuration based on the usage rule when triggering different random access processes, and may ensure that a network device and the UE maintain consistent in random access resource configuration based on the usage rule, thereby improving the stability of the random access process.

FIG. 2 is a flowchart of a method for determining a random access resource configuration according to an embodiment of the disclosure. The method is performed by a UE. As illustrated in FIG. 2, the method for determining a random access resource configuration may include following steps.

Step 201, a first random access resource configuration and/or a second random access resource configuration sent by a network device is obtained.

In an embodiment of the disclosure, the first random access resource configuration and the second random access resource configuration each include at least one random access resource configuration.

In an embodiment of the disclosure, the first random access resource configuration may be a random access resource configuration corresponding to a first version, and the second random access resource configuration mentioned may be a random access resource configuration corresponding to a second version. The first version predates the second version. For example, in an embodiment of the disclosure, the first version may be Release-15 version and/or Release-16 version. The second version may be Release-17 version.

In an embodiment of the disclosure, the first random access resource configuration may include at least one of:
a contention-based random access resource configuration;
a contention-free random access resource configuration; or
a system information-request random access resource configuration, such as Rel-15 SI-RequestConfig, used for an Msg1-based system information request.

In an embodiment of the disclosure, the contention-based random access resource configuration may include at least one of a contention-based two-step random access resource configuration, or a contention-based four-step random access resource configuration. The contention-free random access resource configuration may include at least one of a contention-free two-step random access resource configuration, or a contention-free four-step random access resource configuration.

In an embodiment of the disclosure, in case that the first version is Release-15, the first random access resource configuration may include a contention-based four-step random access resource configuration (such as Rel-15 RACH ConfigCommon), a contention-free 4-step random access resource configuration (Rel-15 RACH ConfigDedicated (for a switching process), or Rel-15 BeamFailureRecoveryConfiguration (for a recovery process for a beam failure).

In another embodiment of the disclosure, in case that the first version is Release-16, the first random access resource configuration may include a contention-based two-step random access resource configuration (such as Rel-16 RACH ConfigCommonTwoStepRA) and a contention-free two-step random access resource configuration (Rel-16 RACH ConfigGenericTwoStepRA).

In an embodiment of the disclosure, each random access resource configuration in the second random access resource configuration corresponds to one specific function.

In an embodiment of the disclosure, the specific function may include at least one of:
a reduced capability (RedCap) function;
a small data transmission (SDT) function;
a coverage enhancement (CovEnh) function; or
a slicing function.

In an embodiment of the disclosure, the second random access resource configuration may include a contention-based random access resource configuration.

In an embodiment of the disclosure, the contention-based random access resource configuration in the second random access resource configuration may include at least one of:
a contention-based two-step random access resource configuration, such as Rel-17 RACH-ConfigCommonTwoStepRA; or
a contention-based four-step random access resource configuration, such as Rel-17 RACH-ConfigCommon.

Step 202, a usage rule for random access resource configurations is determined in response to the UE triggering a random access process.

Step 203, a random access resource configuration is determined based on the usage rule from the first random access resource configuration and/or the second random access resource configuration, and random access is performed based on the random access resource configuration.

In an embodiment of the disclosure, the detailed introduction of steps 202-203 may refer to the relevant introduction in the above embodiments, which is not elaborated in embodiments of the disclosure.

In summary, in the method for determining a random access resource configuration provided in the embodiments of the disclosure, in response to the UE triggering the random access process, the UE may determine the usage rule for random access resource configurations, determine the random access resource configuration based on the determined usage rule, and perform the random access based on the determined random access resource configuration. In this way, in embodiments of the disclosure, the UE may determine a specific random access resource configuration based on the usage rule when triggering different random access processes, and may ensure that a network device and the UE maintain consistent in random access resource configuration based on the usage rule, thereby improving the stability of the random access process.

FIG. 3 is a flowchart of a method for determining a random access resource configuration according to an embodiment of the disclosure. The method is performed by a UE. As illustrated in FIG. 3, the method for determining a random access resource configuration may include following steps.

Step 301, a first random access resource configuration and/or a second random access resource configuration sent by a network device is obtained.

In an embodiment of the disclosure, the detailed introduction of the first random access resource configuration and the second random access resource configuration may refer to the relevant introduction in the above embodiments, which is not elaborated in embodiments of the disclosure.

Step 302, a first usage rule for random access resource configurations is determined in response to the UE triggering a contention-free random access process.

In an embodiment of the disclosure, the first usage rule may include at least one of:
a rule 1: determining the random access resource configuration based on the contention-free random access resource configuration in the first random access resource configuration;
a rule 2: determining the random access resource configuration based on at least one of: the contention-free random access resource configuration in the first random access resource configuration, or at least a portion of the contention-based random access resource configuration in the first random access resource configuration;
a rule 3: determining the random access resource configuration based on all of random access resource configurations in the first random access resource configuration and/or all of random access resource configurations in the second random access resource configuration;
a rule 4: determining the random access resource configuration based on at least one of: the contention-free random access resource configuration in the first random access resource configuration, at least a portion of the contention-based random access resource configuration in the first random access resource configuration, or a random access resource configuration corresponding to a first specific function in the second random access resource configuration; or
a rule 5: determining the random access resource configuration based on at least one of: the contention-free random access resource configuration in the first random access resource configuration, or a random access resource configuration corresponding to a first specific function in the second random access resource configuration.

Step 303, a random access resource configuration is determined based on the first usage rule from the first random access resource configuration and/or the second random access resource configuration, and random access is performed based on the determined random access resource configuration.

**With** reference to the step 302 above, it can be seen that the first usage rule includes multiple different rules. Therefore, in an embodiment of the disclosure, the method for determining the random access resource configuration based on the first usage rule in step 303 may vary with the first usage rule determined in step 302.

In an embodiment of the disclosure, when the first usage rule determined in above step 303 is rule 1, the method for determining the random access resource configuration based on rule 1 from the first random access resource configuration and/or the second random access resource configuration may include: determining the random access resource configuration from the contention-free random access resource configuration in the first random access resource configuration.

For example, in an embodiment of the disclosure, the UE may determine the random access resource configuration based on a Random Access Channel RO Occupation (RACH Occupation, RO) resource indicated in Rel-15 RACH ConfigDedicated and a preamble identifier.

In another embodiment of the disclosure, when the first usage rule determined in above step 303 is rule 2, the method for determining the random access resource configuration based on rule 2 from the first random access resource configuration and/or the second random access resource configuration may include: determining the random access resource configuration from the contention-free random access resource configuration in the first random access resource configuration, and/or at least a portion of the contention-based random access resource configuration in the first random access resource configuration.

For example, in an embodiment of the disclosure, in case that the RACH ConfigDedicated does not include an RO resource (i.e., the contention-free random access resource configuration in the first random access resource configuration does not include an RO resource), but includes a preamble identification and a Reference Signal Received Power (RSRP) configuration for beam selection (e.g., RSRP corresponds to a Synchronous Signal Block (SSB) or a Channel State Information Reference Signal (CSI-RS)), the UE may determine an RO resource indicated in Rel-15 RACH ConfigCommon (i.e. the portion of the contention-based random access resource configuration in the first random access resource configuration) and the preamble identifier indicated in RACH ConfigDedicated (i.e. the contention-free random access resource configuration in the first random access resource configuration) as the random access resource configuration.

For example, in another embodiment of the disclosure, in case that the RACH ConfigDedicated does not include an RO resource or an RSRP configuration for beam selection, but includes a preamble indication, the UE may determine an RO resource in Rel-15 RACH ConfigCommon and an RSRP configuration for beam selection in Rel-15 RACH ConfigCommon (i.e. all contention-based random access resource configurations in the first random access resource configuration), as well as a preamble identifier indicated in RACH ConfigDedicated (i.e. the contention-free random access resource configuration in the first random access resource configuration) as the random access resource configuration.

In another embodiment of the disclosure, when the first usage rule determined in above step 303 is rule 3, the method for determining the random access resource configuration based on rule 3 from the first random access resource configuration and/or the second random access resource configuration may include: determining the random access resource configuration from all random access resource configurations in the first random access resource configuration, and/or from all random access resource configurations in the second random access resource configuration.

For example, in an embodiment of the disclosure, in case that RACH ConfigDedicated indicates an RO resource, a preamble indication, an RSRP configuration used for beam selection, Rel-15 RACH ConfigCommon indicates an RO resource and an RSRP configuration for beam selection, and Rel-17 featureCombinationRACH ConfigCommon indicates an RO resource and an RSRP configuration for beam selection, the UE may determine the RO indicated in RACH ConfigDedicated, the RO indicated in Rel-15 RACH ConfigCommon, and the RO indicated in Rel-17 featureCombinationRACH ConfigCommon (i.e., the random access resource configurations in the second random access resource configuration) as RO resources of the random access resource configuration.

In another embodiment of the disclosure, when the first usage rule determined in above step 303 is rule 4, the method for determining the random access resource configuration based on rule 4 from the first random access resource configuration and/or the second random access resource configuration may include: determining the random access resource configuration from at least one of: the contention-free random access resource configuration in the first random access resource configuration, at least a portion of the contention-based random access resource configuration in the first random access resource configuration, and a random access resource configuration corresponding to the first specific function in the second random access resource configuration.

In an embodiment of the disclosure, the first specific function may include at least one of:
a specific function supported by the UE;
a specific function specified by the network device; or
a specific function agreed in a protocol.

For example, in an embodiment of the disclosure, in case that the UE supports the RedCap function and the SDT function in the specific function, it may be determined that the first specific function is the RedCap function and the SDT function. In this case, the random access resource configuration may be determined from at least one of: the contention-free random access resource configuration in the first random access resource configuration, at least a portion of the contention-based random access resource configuration in the first random access resource configuration, or random access resource configurations corresponding to the RedCap function and the SDT function in the second random access resource configuration.

In another embodiment of the disclosure, when the first usage rule determined in above step 303 is rule 5, the method for determining the random access resource configuration based on rule 5 from the first random access resource configuration and/or the second random access resource configuration may include: determining the random access resource configuration from at least one of: the contention-free random access resource configuration in the first random access resource configuration, or the random access resource configuration corresponding to the first specific function in the second random access resource configuration.

The introduction of the first specific function may refer to the relevant introduction for rule 4 above.

In summary, in the method for determining a random access resource configuration provided in the embodiments of the disclosure, in response to the UE triggering the random access process, the UE may determine the usage rule for random access resource configurations, determine the random access resource configuration based on the determined usage rule, and perform the random access based on the determined random access resource configuration. In this way, in embodiments of the disclosure, the UE may determine a specific random access resource configuration based on the usage rule when triggering different random access processes, and may ensure that a network device and the UE maintain consistent in random access resource configuration based on the usage rule, thereby improving the stability of the random access process.

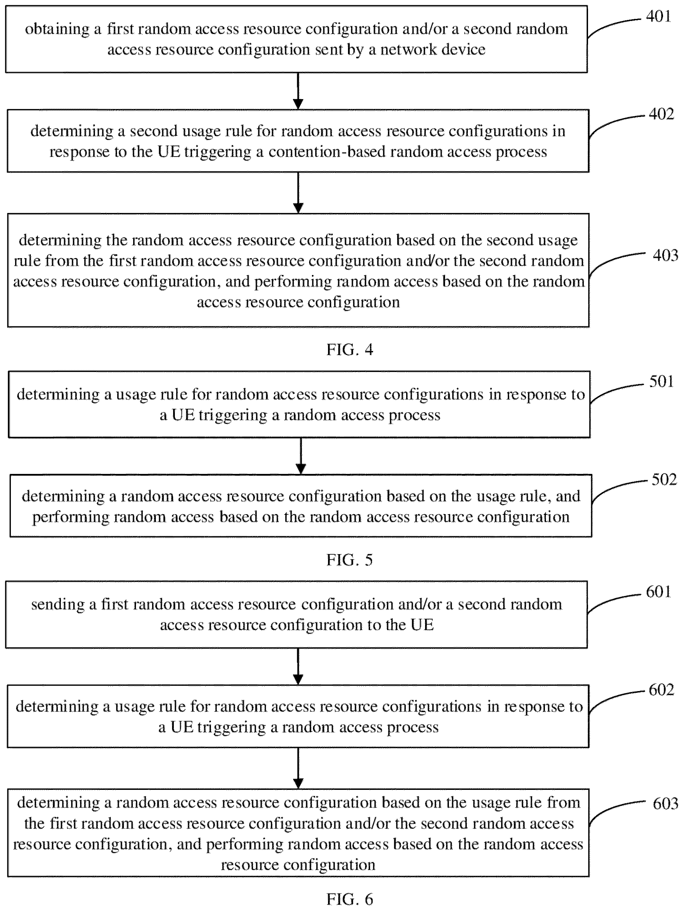

FIG. 4 is a flowchart of a method for determining a random access resource configuration according to an embodiment of the disclosure. The method is performed by a UE. As illustrated in FIG. 4, the method for determining a random access resource configuration may include following steps.

Step 401, a first random access resource configuration and/or a second random access resource configuration sent by a network device is obtained.

In an embodiment of the disclosure, the detailed introduction of the first random access resource configuration and the second random access resource configuration may refer to the relevant introduction in the above embodiments, which is not elaborated in embodiments of the disclosure.

Step 402, a second usage rule for random access resource configurations is determined in response to the UE triggering a contention-based random access process.

In an embodiment of the disclosure, the second usage rule may include at least one of:
a rule 6: determining the random access resource configuration based on all of random access resource configurations in the first random access resource configuration in response to the contention-based random access process being triggered by a function other than the specific function;
a rule 7: determining the random access resource configuration based on all of random access resource configurations in the first random access resource configuration and/or a random access resource configuration corresponding to a first specific function in the second random access resource configuration in response to the contention-based random access process being triggered by a function other than the specific function;
a rule 8: determining the random access resource configuration based on a random access resource configuration corresponding to a second specific function in the second random access resource configuration in response to the contention-based random access process being triggered by a specific function, in which the second specific function is the specific function that triggers the contention-based random access process; in an embodiment of the disclosure, the second specific function may be a combination of one or more of a RedCap function, a SDT function, a CovEnh function, a slicing function; or
a rule 9: determining the random access resource configuration based on a random access resource configuration corresponding to a second specific function in the second random access resource configuration and/or at least a portion of random access resource configurations in the first random access resource configuration in response to the contention-based random access process being triggered by a specific function, in which the second specific function is the specific function that triggers the contention-based random access process. In an embodiment of the disclosure, the second specific function may be a combination of one or more of a RedCap function, a SDT function, a CovEnh function, a slicing function.

Step 403, a random access resource configuration is determined based on the second usage rule from the first random access resource configuration and/or the second random access resource configuration, and random access is performed based on the determined random access resource configuration.

With reference to the step 402 above, it can be seen that the second usage rule includes multiple different rules. Therefore, in an embodiment of the disclosure, the method for determining the random access resource configuration based on the second usage rule in step 403 may vary with the first usage rule determined in step 402.

In an embodiment of the disclosure, when the second usage rule determined in above step 403 is rule 6, the method for determining the random access resource configuration based on rule 6 from the first random access resource configuration and/or the second random access resource configuration may include: determining the random access resource configuration based on all random access resource configurations in the first random access resource configuration.

For example, in an embodiment of the disclosure, in case that the network device is configured with Rel-15 RACH ConfigCommon and also with Rel-17 featureCombinationRACH ConfigCommon, the UE may determine Rel-15 RACH ConfigCommon as the random access resource configuration in response to the contention-based random access process being triggered by a function other than the specific function.

In another embodiment of the disclosure, when the second usage rule determined in above step 403 is rule 7, the method for determining the random access resource configuration based on rule 7 from the first random access resource configuration and/or the second random access resource configuration may include: determining the random access resource configuration based on all random access resource configurations in the first random access resource configuration, and/or the random access resource configuration corresponding to the first specific function in the second random access resource configuration.

For example, in an embodiment of the disclosure, in case that the first specific function is a specific function supported by the UE, and the UE supports the RedCap function and SDT function in the specific function, the UE may support any combination of the RedCap function and the SDT function. In response to the contention-based random access process being triggered by a function other than the specific function, the random access resource configuration may be determined based on all random access resource configurations in the first random access resource configuration, and/or the random access resource configurations corresponding to the RedCap function and SDT function in the second random access resource configuration.

In another embodiment of the disclosure, when the second usage rule determined in above step 403 is rule 8, the method for determining the random access resource configuration based on rule 8 from the first random access resource configuration and/or the second random access resource configuration may include: determining the random access resource configuration based on the random access resource configuration corresponding to the second specific function in the second random access resource configuration.

For example, in an embodiment of the disclosure, in case that the network device is configured with Rel-15 RACH ConfigCommon and Rel-17 featureCombinationRACH ConfigCommon corresponding to the second specific function. When the UE triggers the contention-based random access process (e.g. triggering a contention-based random access process of a SDT process of slice-1) by the second specific function, the UE determines Rel-17 featureCombinationRACH ConfigCommon as the random access resource configuration.

In another embodiment of the disclosure, when the second usage rule determined in above step 403 is rule 9, the method for determining the random access resource configuration based on rule 9 from the first random access resource configuration and/or the second random access resource configuration may include: determining the random access resource configuration based on the random access resource configuration corresponding to the second specific function in the second random access resource configuration, and/or at least a portion of random access resource configurations in the first random access resource configuration.

For example, in an embodiment of the disclosure, in case that the network device is configured with Rel-15 RACH ConfigCommon and Rel-17 featureCombinationRACH ConfigCommon corresponding to the second specific function, and there is a RSRP configuration for beam selection but no RO configuration in Rel-17 featureCombinationRACH ConfigCommon, when the UE triggers the contention-based random access process by the second specific function (e.g, when the UE triggers the contention-based random access process by the SDT process of slice-1, i.e., the second specific function is a combination of the slicing function and the SDT function), the UE may determine the RSRP configuration for beam selection in Rel-17 featureCombinationRACH ConfigCommon corresponding to the second specific function, as well as the RO configuration in Rel-15 RACH ConfigCommon (i.e. the portion of random access resource configurations in the first random access resource configuration) as the random access resource configuration.

For example, in another embodiment of the disclosure, in case that the network device is configured with Rel-15 RACH ConfigCommon and Rel-17 featureCombinationRACH ConfigCommon corresponding to the second specific function, and there is no RO configuration or RSRP configuration for beam selection in Rel-17 featureCombinationRACH ConfigCommon, when the UE triggers the contention-based random access process by the first specific function (e.g., triggering the contention-based random access process of the SDT process of slice-1, i.e., the second specific function is a combination of the slicing function and the SDT function), the UE determines the RSRP configuration for beam selection in Rel-15 RACH ConfigCommon, as well as the RO configuration in Rel-15 RACH ConfigCommon (i.e. all random access resource configurations in the first random access resource configuration) as the random access resource configuration.

For example, in another embodiment of the disclosure, in case that the network device is configured with Rel-15 RACH ConfigCommon and Rel-17 featureCombinationRACH ConfigCommon corresponding to the second specific function, and there is an RO configuration but no RSRP configuration for beam selection in the configuration of Rel-17 featureCombinationRACH ConfigCommon, when the UE triggers the contention-based random access process by the second specific function (e.g. triggering the contention-based random access process of the SDT process of slice-1, i.e. the second specific function is a combination of the slicing function and the SDT function), the UE may determine the RSRP configuration for beam selection in Rel-15 RACH ConfigCommon, the RO configuration in Rel-15 RACH ConfigCommon (i.e. all random access resource configurations in the first random access resource configuration), and the RO configuration in Rel-17 featureCombinationRACH ConfigCommon as the random access resource configuration.

The introduction of the first specific function may refer to the relevant introduction for rule 4 above.

In summary, in the method for determining a random access resource configuration provided in the embodiments of the disclosure, in response to the UE triggering the random access process, the UE may determine the usage rule for random access resource configurations, determine the random access resource configuration based on the determined usage rule, and perform the random access based on the determined random access resource configuration. In this way, in embodiments of the disclosure, the UE may determine a specific random access resource configuration based on the usage rule when triggering different random access processes, and may ensure that a network device and the UE maintain consistent in random access resource configuration based on the usage rule, thereby improving the stability of the random access process.

FIG. 5 is a flowchart of a method for determining a random access resource configuration according to an embodiment of the disclosure. The method is performed by a network device. As illustrated in FIG. 5, the method for determining a random access resource configuration includes following steps.

Step 501, a usage rule for random access resource configurations is determined in response to a user equipment (UE) triggering a random access process.

In an embodiment of the disclosure, the usage rule may be used to determine a random access resource configuration used in a random access process. In an embodiment of the disclosure, the determined usage rule may vary depending on the random access process triggered by the UE.

In an embodiment of the disclosure, when the UE triggers a contention-free random access process, a first usage rule is determined. The first usage rule is used to determine a random access resource configuration in the contention-free random access process.

In another embodiment of the disclosure, when the UE triggers a contention-free random access process, a second usage rule is determined. The second usage rule is used to determine a random access resource configuration in a contention-based random access process.

In an embodiment of the disclosure, the method for the network device to determine the usage rule for random access resource configurations may include at least one of: determining the usage rule for random access resource configurations based on a protocol agreement; or determining the usage rule for random access resource configurations by the network device itself.

It should be noted that, in an embodiment of the disclosure the network device may determine a type of the random access process triggered by the UE based on all existing usage rules and a random access resource used by the UE, and then determine a usage rule corresponding to the type of the random access process. The type of the random access process may include: contention-based four-step random access, contention-based two-step random access, contention-free four-step random access, contention-free two-step random access, or system information-request random access.

Step 502, a random access resource configuration is determined based on the usage rule, and random access is performed based on the random access resource configuration.

In an embodiment of the disclosure, the random access process triggered by UE may be a contention-free random access process, and the first usage rule may be used to determine the random access resource configuration. In another embodiment of the disclosure, the random access process triggered by UE may be a contention-based random access process, and the second usage rule may be used to determine the random access resource configuration.

A detailed introduction of the first usage rule and second usage rule may refer to the above embodiments, which is not elaborated in embodiments of the disclosure.

In summary, in the method for determining a random access resource configuration provided in the embodiments of the disclosure, the network device may determine the usage rule for random access resource configurations in response to the UE triggering the random access process, determine the random access resource configuration based on the determined usage rule, and perform the random access based on the determined random access resource configuration. In this way, in embodiments of the disclosure, the UE may determine a specific random access resource configuration based on the usage rule when triggering different random access processes, and may ensure that a network device and the UE maintain consistent in random access resource configuration based on the usage rule, thereby improving the stability of the random access process.

FIG. 6 is a flowchart of a method for determining a random access resource configuration according to an embodiment of the disclosure. The method is performed by a network device. As illustrated in FIG. 6, the method for determining a random access resource configuration includes following steps.

Step 601, a first random access resource configuration and/or a second random access resource configuration sent is sent to a UE.

In an embodiment of the disclosure, the first random access resource configuration and the second random access resource configuration each include at least one random access resource configuration.

In an embodiment of the disclosure, each random access resource configuration in the second random access resource configuration corresponds to one specific function.

A detailed introduction of the first random access resource configuration and the second random access resource configuration may refer to the relevant introduction in the above embodiments, which is not elaborated in embodiments of the disclosure.

Step 602, a usage rule for random access resource configurations is determined in response to the UE triggering a random access process.

Step 603, a random access resource configuration is determined based on the usage rule from the first random access resource configuration and/or the second random access resource configuration, and random access is performed based on the random access resource configuration.

A detailed introduction of steps 602-603 may refer to the relevant introduction in the above embodiments, which is not elaborated in embodiments of the disclosure.

In summary, in the method for determining a random access resource configuration provided in the embodiments of the disclosure, the network device may determine the usage rule for random access resource configurations in response to the UE triggering the random access process, determine the random access resource configuration based on the determined usage rule, and perform the random access based on the determined random access resource configuration. In this way, in embodiments of the disclosure, the UE may determine a specific random access resource configuration based on the usage rule when triggering different random access processes, and may ensure that a network device and the UE maintain consistent in random access resource configuration based on the usage rule, thereby improving the stability of the random access process.

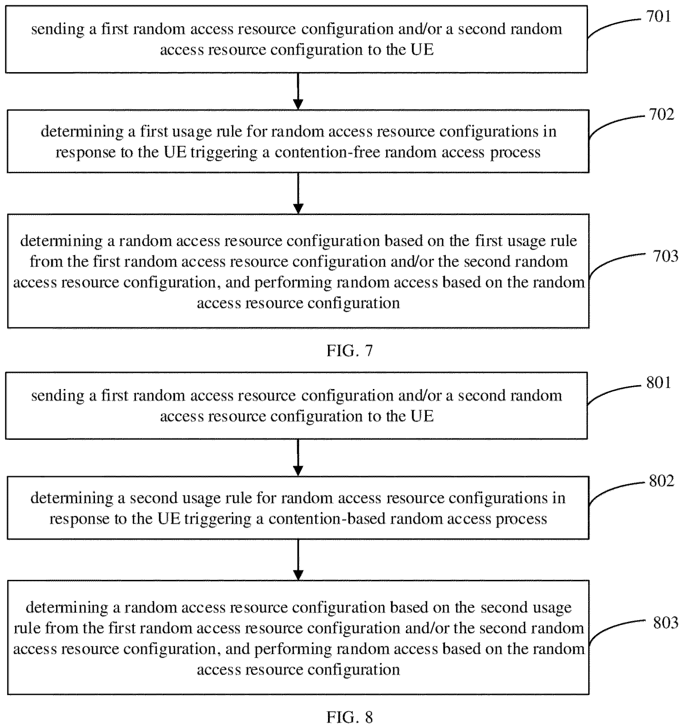

FIG. 7 is a flowchart of a method for determining a random access resource configuration according to an embodiment of the disclosure. The method is performed by a network device. As illustrated in FIG. 7, the method for determining a random access resource configuration includes following steps.

Step 701, a first random access resource configuration and/or a second random access resource configuration sent is sent to a UE.

In an embodiment of the disclosure, the detailed introduction of the first random access resource configuration and the second random access resource configuration may refer to the relevant introduction in the above embodiments, which is not elaborated in embodiments of the disclosure.

Step 702, a first usage rule for random access resource configurations is determined in response to the UE triggering a contention-free random access process.

In an embodiment of the disclosure, the first usage rule may include at least one of:
a rule 1: determining the random access resource configuration based on the contention-free random access resource configuration in the first random access resource configuration;
a rule 2: determining the random access resource configuration based on at least one of: the contention-free random access resource configuration in the first random access resource configuration, or at least a portion of the contention-based random access resource configuration in the first random access resource configuration;
a rule 3: determining the random access resource configuration based on all of random access resource configurations in the first random access resource configuration and/or all of random access resource configurations in the second random access resource configuration;
a rule 4: determining the random access resource configuration based on at least one of: the contention-free random access resource configuration in the first random access resource configuration, at least a portion of the contention-based random access resource configuration in the first random access resource configuration, or a random access resource configuration corresponding to a first specific function in the second random access resource configuration; or
a rule 5: determining the random access resource configuration based on at least one of: the contention-free random access resource configuration in the first random access resource configuration, or a random access resource configuration corresponding to a first specific function in the second random access resource configuration.

Step 703, a random access resource configuration is determined based on the first usage rule from the first random access resource configuration and/or the second random access resource configuration, and random access is performed based on the determined random access resource configuration.

With reference to the step 702 above, it can be seen that the first usage rule includes multiple different rules. Therefore, in an embodiment of the disclosure, the method for determining the random access resource configuration based on the first usage rule in step 703 may vary with the first usage rule determined in step 702.

In an embodiment of the disclosure, when the first usage rule determined in above step 703 is rule 1, the method for determining the random access resource configuration based on rule 1 from the first random access resource configuration and/or the second random access resource configuration may include: determining the random access resource configuration from the contention-free random access resource configuration in the first random access resource configuration.

In another embodiment of the disclosure, when the first usage rule determined in above step 703 is rule 2, the method for determining the random access resource configuration based on rule 2 from the first random access resource configuration and/or the second random access resource configuration may include: determining the random access resource configuration from the contention-free random access resource configuration in the first random access resource configuration, and/or at least a portion of the contention-based random access resource configuration in the first random access resource configuration.

In another embodiment of the disclosure, when the first usage rule determined in above step 703 is rule 3, the method for determining the random access resource configuration based on rule 3 from the first random access resource configuration and/or the second random access resource configuration may include: determining the random access resource configuration from all random access resource configurations in the first random access resource configuration, and/or from all random access resource configurations in the second random access resource configuration.

In another embodiment of the disclosure, when the first usage rule determined in above step 703 is rule 4, the method for determining the random access resource configuration based on rule 4 from the first random access resource configuration and/or the second random access resource configuration may include: determining the random access resource configuration from at least one of: the contention-free random access resource configuration in the first random access resource configuration, at least a portion of the contention-based random access resource configuration in the first random access resource configuration, and a random access resource configuration corresponding to the first specific function in the second random access resource configuration.

In an embodiment of the disclosure, the first specific function may include at least one of:
a specific function supported by the UE;
a specific function specified by the network device; or
a specific function agreed in a protocol.

In another embodiment of the disclosure, when the first usage rule determined in above step 703 is rule 5, the method for determining the random access resource configuration based on rule 5 from the first random access resource configuration and/or the second random access resource configuration may include: determining the random access resource configuration from at least one of: the contention-free random access resource configuration in the first random access resource configuration, or the random access resource configuration corresponding to the first specific function in the second random access resource configuration.

The introduction of the first specific function may refer to the relevant introduction for rule 4 above.

In summary, in the method for determining a random access resource configuration provided in the embodiments of the disclosure, the network device may determine the usage rule for random access resource configurations in response to the UE triggering the random access process, determine the random access resource configuration based on the determined usage rule, and perform the random access based on the determined random access resource configuration. In this way, in embodiments of the disclosure, the UE may determine a specific random access resource configuration based on the usage rule when triggering different random access processes, and may ensure that a network device and the UE maintain consistent in random access resource configuration based on the usage rule, thereby improving the stability of the random access process.

FIG. 8 is a flowchart of a method for determining a random access resource configuration according to an embodiment of the disclosure. The method is performed by a network device. As illustrated in FIG. 8, the method for determining a random access resource configuration includes following steps.

Step 801, a first random access resource configuration and/or a second random access resource configuration sent is sent to a UE.

In an embodiment of the disclosure, the detailed introduction of the first random access resource configuration and the second random access resource configuration may refer to the relevant introduction in the above embodiments, which is not elaborated in embodiments of the disclosure.

Step 802, a second usage rule for random access resource configurations is determined in response to the UE triggering a contention-based random access process.

In an embodiment of the disclosure, the second usage rule may include at least one of:
a rule 6: determining the random access resource configuration based on all of random access resource configurations in the first random access resource configuration in response to the contention-based random access process being triggered by a function other than the specific function;
a rule 7: determining the random access resource configuration based on all of random access resource configurations in the first random access resource configuration and/or a random access resource configuration corresponding to a first specific function in the second random access resource configuration in response to the contention-based random access process being triggered by a function other than the specific function;
a rule 8: determining the random access resource configuration based on a random access resource configuration corresponding to a second specific function in the second random access resource configuration in response to the contention-based random access process being triggered by a specific function, in which the second specific function is the specific function that triggers the contention-based random access process; in an embodiment of the disclosure, the second specific function may be a combination of one or more of a RedCap function, a SDT function, a CovEnh function, a slicing function; or
a rule 9: determining the random access resource configuration based on a random access resource configuration corresponding to a second specific function in the second random access resource configuration and/or at least a portion of random access resource configurations in the first random access resource configuration in response to the contention-based random access process being triggered by a specific function, in which the second specific function is the specific function that triggers the contention-based random access process. In an embodiment of the disclosure, the second specific function may be a combination of one or more of a RedCap function, a SDT function, a CovEnh function, a slicing function.

Step 803, a random access resource configuration is determined based on the second usage rule from the first random access resource configuration and/or the second random access resource configuration, and random access is performed based on the determined random access resource configuration.

With reference to the step 802 above, it can be seen that the second usage rule includes multiple different rules. Therefore, in an embodiment of the disclosure, the method for determining the random access resource configuration based on the second usage rule in step 803 may vary with the first usage rule determined in step 802.

In an embodiment of the disclosure, when the second usage rule determined in above step 803 is rule 6, the method for determining the random access resource configuration based on rule 6 from the first random access resource configuration and/or the second random access resource configuration may include: determining the random access resource configuration based on all random access resource configurations in the first random access resource configuration.

In another embodiment of the disclosure, when the second usage rule determined in above step 803 is rule 7, the method for determining the random access resource configuration based on rule 7 from the first random access resource configuration and/or the second random access resource configuration may include: determining the random access resource configuration based on all random access resource configurations in the first random access resource configuration, and/or the random access resource configuration corresponding to the first specific function in the second random access resource configuration.

In another embodiment of the disclosure, when the second usage rule determined in above step 803 is rule 8, the method for determining the random access resource configuration based on rule 8 from the first random access resource configuration and/or the second random access resource configuration may include: determining the random access resource configuration based on the random access resource configuration corresponding to the second specific function in the second random access resource configuration.

In another embodiment of the disclosure, when the second usage rule determined in above step 803 is rule 9, the method for determining the random access resource configuration based on rule 9 from the first random access resource configuration and/or the second random access resource configuration may include: determining the random access resource configuration based on the random access resource configuration corresponding to the second specific function in the second random access resource configuration, and/or at least a portion of random access resource configurations in the first random access resource configuration.

The introduction of the second specific function may refer to the relevant introduction for rule 4 above.

In summary, in the method for determining a random access resource configuration provided in the embodiments of the disclosure, the network device may determine the usage rule for random access resource configurations in response to the UE triggering the random access process, determine the random access resource configuration based on the determined usage rule, and perform the random access based on the determined random access resource configuration. In this way, in embodiments of the disclosure, the UE may determine a specific random access resource configuration based on the usage rule when triggering different random access processes, and may ensure that a network device and the UE maintain consistent in random access resource configuration based on the usage rule, thereby improving the stability of the random access process.

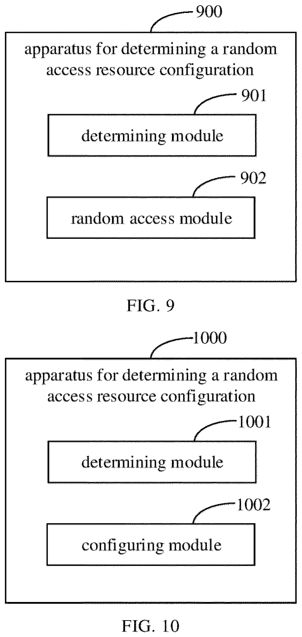

FIG. 9 is a block diagram of an apparatus for determining a random access resource configuration according to an embodiment of the disclosure. As shown in FIG. 9, the apparatus 900 includes:
a determining module 901, configured to determine a usage rule for random access resource configurations in response to the UE triggering a random access process; and
a random access module 902, configured to determine a random access resource configuration based on the usage rule, and perform random access based on the random access resource configuration.

In summary, in the apparatus for determining a random access resource configuration provided in the embodiments of the disclosure, in response to the UE triggering the random access process, the UE may determine the usage rule for random access resource configurations, determine the random access resource configuration based on the determined usage rule, and perform the random access based on the determined random access resource configuration. In this way, in embodiments of the disclosure, the UE may determine a specific random access resource configuration based on the usage rule when triggering different random access processes, and may ensure that a network device and the UE maintain consistent in random access resource configuration based on the usage rule, thereby improving the stability of the random access process.

In an embodiment of the disclosure, the apparatus is further configured to:
obtain a first random access resource configuration and/or a second random access resource configuration sent by a network device; in which the first random access resource configuration and the second random access resource configuration each include at least one random access resource configuration; and each random access resource configuration in the second random access resource configuration corresponds to one specific function.

In another embodiment of the disclosure, the specific function includes at least one of:
a RedCap function
a SDT function
a CovEnh function; or
a slicing function.

In another embodiment of the disclosure, the first random access resource configuration includes at least one of:
a contention-based random access resource configuration;
a contention-free random access resource configuration; or
a system information-request random access resource configuration.

In another embodiment of the disclosure, the second random access resource configuration includes a contention-based random access resource configuration.

In another embodiment of the disclosure, the determining module 901 is configured to:
determine a first usage rule for random access resource configurations in response to the UE triggering a contention-free random access process.

**In** another embodiment of the disclosure, the random access module 902 is configured to:
determine the random access resource configuration based on the first usage rule from the first random access resource configuration and/or the second random access resource configuration.

In another embodiment of the disclosure, the first usage rule includes at least one of:
a rule 1: determining the random access resource configuration based on the contention-free random access resource configuration in the first random access resource configuration;
a rule 2: determining the random access resource configuration based on at least one of: the contention-free random access resource configuration in the first random access resource configuration, or at least a portion of the contention-based random access resource configuration in the first random access resource configuration;
a rule 3: determining the random access resource configuration based on all of random access resource configurations in the first random access resource configuration and/or all of random access resource configurations in the second random access resource configuration;
a rule 4: determining the random access resource configuration based on at least one of: the contention-free random access resource configuration in the first random access resource configuration, at least a portion of the contention-based random access resource configuration in the first random access resource configuration, or a random access resource configuration corresponding to a first specific function in the second random access resource configuration; or
a rule 5: determining the random access resource configuration based on at least one of: the contention-free random access resource configuration in the first random access resource configuration, or a random access resource configuration corresponding to a first specific function in the second random access resource configuration.

In another embodiment of the disclosure, the first specific function includes at least one of:
a specific function supported by the UE;
a specific function specified by the network device; or
a specific function agreed in a protocol.

In another embodiment of the disclosure, the determining module 901 is configured to:
determine a first usage rule for random access resource configurations in response to the UE triggering a contention-based random access process.

**In** another embodiment of the disclosure, the random access module 902 is configured to:
determine the random access resource configuration based on the second usage rule from the first random access resource configuration and/or the second random access resource configuration.

In another embodiment of the disclosure, the second usage rule includes at least one of:
a rule 6: determining the random access resource configuration based on all of random access resource configurations in the first random access resource configuration in response to the contention-based random access process being triggered by a function other than the specific function;
a rule 7: determining the random access resource configuration based on all of random access resource configurations in the first random access resource configuration and/or a random access resource configuration corresponding to a first specific function in the second random access resource configuration in response to the contention-based random access process being triggered by a function other than the specific function;
a rule 8: determining the random access resource configuration based on a random access resource configuration corresponding to a second specific function in the second random access resource configuration in response to the contention-based random access process being triggered by a specific function, in which the second specific function is the specific function that triggers the contention-based random access process; or
a rule 9: determining the random access resource configuration based on a random access resource configuration corresponding to a second specific function in the second random access resource configuration and/or at least a portion of random access resource configurations in the first random access resource configuration in response to the contention-based random access process being triggered by a specific function, in which the second specific function is the specific function that triggers the contention-based random access process.

In another embodiment of the disclosure, the first specific function includes at least one of:
a specific function supported by the UE;
a specific function specified by the network device; or
a specific function agreed in a protocol.

In another embodiment of the disclosure, the contention-based random access resource configuration includes at least one of:
a contention-based two-step random access resource configuration; or
a contention-based four-step random access resource configuration.

In another embodiment of the disclosure, the contention-free random access resource configuration includes at least one of:
a contention-free two-step random access resource configuration; or
a contention-free four-step random access resource configuration.

FIG. 10 is a block diagram of an apparatus for determining a random access resource configuration according to an embodiment of the disclosure. As shown in FIG. 10, the apparatus 1000 includes:
a determining module 1001, configured to determine a usage rule for random access resource configurations in response to a UE triggering a random access process; and
a configuring module 1002, configured to determine a random access resource configuration based on the usage rule, and perform random access based on the random access resource configuration.

In summary, in the apparatus for determining a random access resource configuration provided in the embodiments of the disclosure, the network device may determine the usage rule for random access resource configurations in response to the UE triggering the random access process, determine the random access resource configuration based on the determined usage rule, and perform the random access based on the determined random access resource configuration. In this way, in embodiments of the disclosure, the UE may determine a specific random access resource configuration based on the usage rule when triggering different random access processes, and may ensure that a network device and the UE maintain consistent in random access resource configuration based on the usage rule, thereby improving the stability of the random access process.

In an embodiment of the disclosure, the apparatus is further configured to:
send a first random access resource configuration and/or a second random access resource configuration to a UE; in which the first random access resource configuration and the second random access resource configuration each include at least one random access resource configuration; and each random access resource configuration in the second random access resource configuration corresponds to one specific function.

In another embodiment of the disclosure, the specific function includes at least one of:
a RedCap function
a SDT function
a CovEnh function; or
a slicing function.

In another embodiment of the disclosure, the first random access resource configuration includes at least one of:
a contention-based random access resource configuration;
a contention-free random access resource configuration; or
a system information-request random access resource configuration.

In another embodiment of the disclosure, the second random access resource configuration includes a contention-based random access resource configuration.

In another embodiment of the disclosure, the determining module 1001 is configured to:
determine a first usage rule for random access resource configurations in response to the UE triggering a contention-free random access process.

In another embodiment of the disclosure, the configuring module 1002 is configured to:
determine the random access resource configuration based on the first usage rule from the first random access resource configuration and/or the second random access resource configuration.

In another embodiment of the disclosure, the first usage rule includes at least one of:
a rule 1: determining the random access resource configuration based on the contention-free random access resource configuration in the first random access resource configuration;
a rule 2: determining the random access resource configuration based on at least one of: the contention-free random access resource configuration in the first random access resource configuration, or at least a portion of the contention-based random access resource configuration in the first random access resource configuration;
a rule 3: determining the random access resource configuration based on all of random access resource configurations in the first random access resource configuration and/or all of random access resource configurations in the second random access resource configuration;
a rule 4: determining the random access resource configuration based on at least one of: the contention-free random access resource configuration in the first random access resource configuration, at least a portion of the contention-based random access resource configuration in the first random access resource configuration, or a random access resource configuration corresponding to a first specific function in the second random access resource configuration; or
a rule 5: determining the random access resource configuration based on at least one of: the contention-free random access resource configuration in the first random access resource configuration, or a random access resource configuration corresponding to a first specific function in the second random access resource configuration.

In another embodiment of the disclosure, the first specific function includes at least one of:
a specific function supported by the UE;
a specific function specified by the network device; or
a specific function agreed in a protocol.

In another embodiment of the disclosure, the determining module 1001 is configured to:
determine a second usage rule for random access resource configurations in response to the UE triggering a contention-based random access process.

In another embodiment of the disclosure, the configuring module 1002 is configured to:
determine the random access resource configuration based on the second usage rule from the first random access resource configuration and/or the second random access resource configuration.

In another embodiment of the disclosure, the second usage rule includes at least one of:
a rule 6: determining the random access resource configuration based on all of random access resource configurations in the first random access resource configuration in response to the contention-based random access process being triggered by a function other than the specific function;
a rule 7: determining the random access resource configuration based on all of random access resource configurations in the first random access resource configuration and/or a random access resource configuration corresponding to a first specific function in the second random access resource configuration in response to the contention-based random access process being triggered by a function other than the specific function;
a rule 8: determining the random access resource configuration based on a random access resource configuration corresponding to a second specific function in the second random access resource configuration in response to the contention-based random access process being triggered by a specific function, in which the second specific function is the specific function that triggers the contention-based random access process; or
a rule 9: determining the random access resource configuration based on a random access resource configuration corresponding to a second specific function in the second random access resource configuration and/or at least a portion of random access resource configurations in the first random access resource configuration in response to the contention-based random access process being triggered by a specific function, in which the second specific function is the specific function that triggers the contention-based random access process.

In another embodiment of the disclosure, the first specific function includes at least one of:
a specific function supported by the UE;
a specific function specified by the network device; or
a specific function agreed in a protocol.

In another embodiment of the disclosure, the contention-based random access resource configuration includes at least one of:
a contention-based two-step random access resource configuration; or
a contention-based four-step random access resource configuration.

In another embodiment of the disclosure, the contention-free random access resource configuration includes at least one of:
a contention-free two-step random access resource configuration; or
a contention-free four-step random access resource configuration.

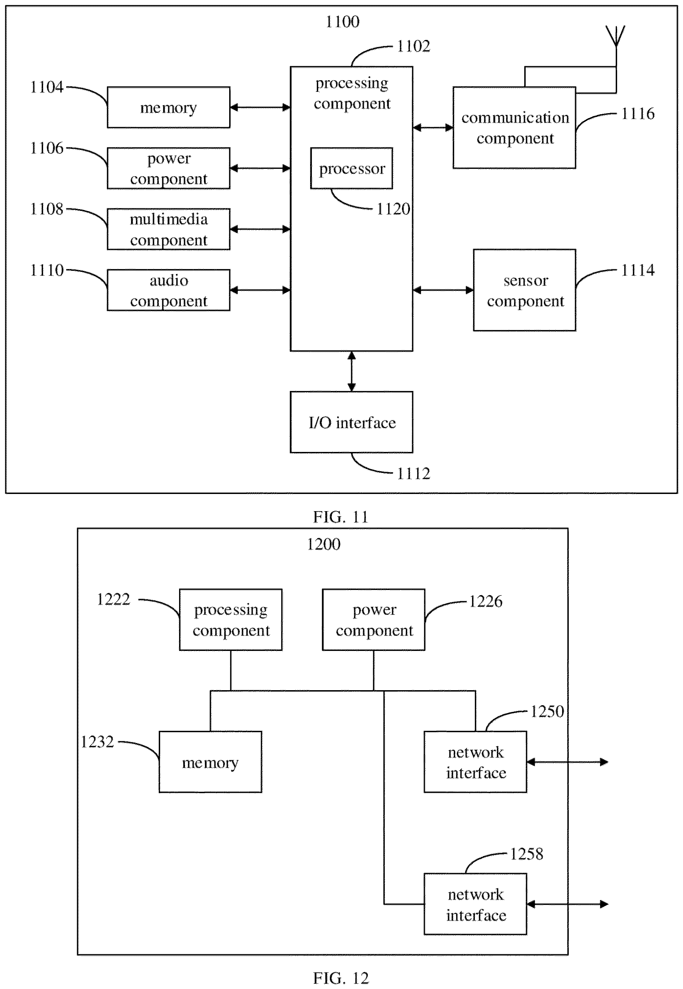

FIG. 11 is a block diagram illustrating a UE 1100 according to an embodiment of the disclosure. For example, the UE 1100 may be a mobile phone, a computer, a digital broadcasting terminal device, a message transceiver device, a game console, a tablet device, a medical device, a fitness device and a personal digital assistant.

As illustrated in FIG. 11, the UE 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the UE 1100, such as the operations associated with display, telephone calls, data communications, camera operations, and recording operations. The processing component 1102 may include one or more processors 1120 to perform all or part of the steps in the above described method. Moreover, the processing component 1102 may include one or more modules which facilitate the interaction between the processing component 1102 and other components. For example, the processing component 1102 may include a multimedia module to facilitate the interaction between the multimedia component 1108 and the processing component 1102.

The memory 1104 is configured to store various types of data to support the operation of the UE 1100. Examples of such data include instructions for any applications or methods operated on the UE 1100, contact data, phonebook data, messages, pictures, videos, etc. The memory 1104 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1106 provides power to various components of the UE 1100. The power component 1106 may include a power management system, one or more power sources, and any other components associated with the generation, management, and distribution of power in the UE 1100.

The multimedia component 1108 includes a screen providing an output interface between the UE 1100 and a user. In some embodiments, the screen may include a Liquid Crystal Display (LCD) and a Touch Panel (TP). In case that the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time and a pressure associated with the touch or swipe action. In some embodiments, the multimedia component 1108 includes a front-facing camera and/or a rear-facing camera. When the UE 1100 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1110 is configured to output and/or input audio signals. For example, the audio component 1110 includes a microphone (MIC) configured to receive an external audio signal when the UE 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1113 includes one or more sensors to provide status assessments of various aspects of the UE 1100. For instance, the sensor component 1113 may detect an open/closed status of the UE 1100, relative positioning of components, e.g., the display and the keypad, of the UE 1100, a change in position of the UE 1100 or a component of the UE 1100, a presence or absence of user contact with the UE 1100, an orientation or an acceleration/deceleration of the UE 1100, and a change in temperature of the UE 1100. The sensor component 1114 may include a proximity sensor configured to detect the presence of nearby objects without any physical contact. The sensor component 1114 may also include a light sensor, such as a Complementary Metal Oxide Semiconductor (CMOS) or Charge-Coupled Device (CCD) image sensor, for use in imaging applications. In some embodiments, the sensor component 1113 may also include an accelerometer sensor, a gyroscope sensor, a magnetic sensor, a pressure sensor, or a temperature sensor.

The communication component 1116 is configured to facilitate communication, wired or wirelessly, between the UE 1100 and other devices. The UE 1100 can access a wireless network based on a communication standard, such as Wi-Fi, 2G or 3G, or a combination thereof. In an embodiment, the communication component 1116 receives a broadcast signal from an external broadcast management system or broadcasts associated information via a broadcast channel. In an embodiment, the communication component 1116 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In embodiments, the UE 1100 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

FIG. 12 is a block diagram illustrating a network device 1200 of an embodiment of the disclosure. For example, the network device 1200 may be provided as a network side device. As illustrated in FIG. 12, the network device 1200 includes a processing component 1211 consisting of one or more processors, and memory resources represented by a memory 1232 for storing instructions that may be executed by the processing component 1222, such as applications. The application programs stored in the memory 1232 may include one or more modules each corresponding to a set of instructions. In addition, the processing component 1215 is configured to execute the instructions to perform any of the methods described above that are applicable to the network device, for example, the methods shown in FIG. 1.

The network device 1200 may also include a power component 1226 configured to perform power management of the network device 1200, a wired or wireless network interface 1250 configured to connect the network device 1200 to a network, and an I/O interface 1258. The network device 1200 may operate based on an operating system stored in the memory 1232, such as Windows Server ^{™}, Mac OS X^{™}, Unix^{™}, Linux^{™}, FreeBSD^{™}, or the like.

In the above embodiments of the disclosure, the method provided in embodiments of the disclosure is introduced from the perspective of the network device, the UE and the RIS array. In order to achieve the various functions of the method provided in the above embodiments of the disclosure, the network device and UE may include a hardware structure, a software module, or hardware structure plus software module to achieve the above functions. One of the above functions can be executed in the form of hardware structure, software module, or hardware structure plus software module.

In the above embodiments of the disclosure, the method provided in embodiments of the disclosure is introduced from the perspective of the network device, the UE and the RIS array. In order to achieve the various functions of the method provided in the above embodiments of the disclosure, the network device and UE may include a hardware structure, a software module, or hardware structure plus software module to achieve the above functions. One of the above functions can be executed in the form of hardware structure, software module, or hardware structure plus software module.

Embodiments of the disclosure provide a communication device. The communication device may include a transceiver module and a processing module. The transceiver module can include a sending module and/or a receiving module. The sending module is used to implement a sending function, the receiving module is used to implement a receiving function, and the transceiver module can implement the sending and/or receiving function.

The communication device can be a terminal (such as the UE in the above method embodiments), a device within a terminal, or a device that can be used together with the terminal. Alternatively, the communication device can be a network device, a device within a network device, or a device that can be used together with the network device.

Embodiments of the disclosure provide another communication device. The communication device can be a network device, a terminal (such as the UE in the above method embodiments), a chip, a chip system, or a processor that supports the network device to implement the above method, and can also be a chip, a chip system, or a processor that supports the terminal to implement the above method. The device can be used to implement the methods described in the above method embodiments, as described in the above method embodiments.

The communication device may include one or more processors. The processor may be a general-purpose processor or a dedicated processor, such as, a baseband processor and a central processor. The baseband processor is used for processing communication protocols and communication data. The central processor is used for controlling the communication device (e.g., a network device, a baseband chip, a terminal, a terminal chip, a distributed unit (DU), or a central unit (CU)), executing computer programs, and processing data of the computer programs.

Optionally, the communication device may include one or more memories on which a computer program may be stored. The processor executes the computer program to cause the communication device to perform the methods described in the above method embodiments. Optionally, the memory may also store data. The communication device and the memory may be provided separately or may be integrated together.

Optionally, the communication device may also include a transceiver and an antenna. The transceiver may be referred to as a transceiver unit, a transceiver machine, or a transceiver circuit, for realizing a transceiver function. The transceiver may include a receiver and a transmitter. The receiver may be referred to as a receiving machine or a receiving circuit, etc., for realizing the receiving function. The transmitter may be referred to as a transmitter machine or a transmitting circuit, etc., for realizing the transmitting function.

Optionally, the communication device may include one or more interface circuits. The interface circuits are used to receive code instructions and transmit them to the processor. The processor runs the code instructions to cause the communication device to perform the method described in the method embodiments.

The communication device is a terminal (such the UE in the above method embodiments). The processor is configured to perform the method shown in FIG. 8.

The communication device is a network device. The transceiver is configured to perform the method shown in FIGs. 6-7.

The communication device is an RIS array. The transceiver is configured to perform the method shown in FIGs. 1-5.

In an implementation, the processor may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor may store a computer program. When the computer program runs on the processor, the communication device may be caused to perform the methods described in the method embodiments above. The computer program may be solidified in the processor, and in such case the processor may be implemented by hardware.

In an implementation, the communication device may include circuits. The circuits may implement the sending, receiving or communicating function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a terminal (such the UE in the above method embodiments), but the scope of the communication device described in the disclosure is not limited thereto, and the structure of the communication device may not be limited. The communication device may be a stand-alone device or may be part of a larger device. For example, the communication device may be:
**(1)** a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

For a case where the communication device may be a chip or a chip system, the chip includes a processor and an interface. There may be one or more processors, and there may be multiple interfaces.

Optionally, the chip further includes a memory used to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The embodiments of the disclosure also provide a system for determining a sidelink duration. The system includes the communication device as a terminal (such the first terminal in the above method embodiments) and the communication device as a network device in the above embodiments. Or, the system includes the communication device as a terminal (such the first terminal in the above method embodiments) and the communication device as a network device in the above embodiments.

The disclosure also provides a computer-readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs)) or a wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understands that the first, second, and other various numerical numbers involved in the disclosure are only described for the convenience of differentiation, and are not used to limit the scope of the embodiments of the disclosure, but to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D", are used to distinguish different technical features of the type, the technical features described using the "first", "second", and "third", and "A", "B", "C" and "D", do not indicate any order of precedence or magnitude.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for determining a random access resource configuration, performed by a user equipment (UE), comprising:
determining a usage rule for random access resource configurations in response to the UE triggering a random access process; and
determining a random access resource configuration based on the usage rule, and performing random access based on the random access resource configuration.

2. The method of claim 1, further comprising:
obtaining a first random access resource configuration and/or a second random access resource configuration sent by a network device; wherein the first random access resource configuration and the second random access resource configuration each comprise at least one random access resource configuration; and each random access resource configuration in the second random access resource configuration corresponds to one specific function.

3. The method of claim 2, wherein the specific function comprises at least one of:
a reduced capability (RedCap) function;
a small data transmission (SDT) function;
a coverage enhancement (CovEnh) function; or
a slicing function.

4. The method of claim 2, wherein the first random access resource configuration comprises at least one of:
a contention-based random access resource configuration;
a contention-free random access resource configuration; or
a system information-request random access resource configuration.

5. The method of claim 2, wherein the second random access resource configuration comprises a contention-based random access resource configuration.

6. The method of claim 4 or 5, wherein determining the usage rule for random access resource configurations in response to the UE triggering the random access process comprises:
determining a first usage rule for random access resource configurations in response to the UE triggering a contention-free random access process;
wherein determining the random access resource configuration based on the usage rule comprises:
determining the random access resource configuration based on the first usage rule from the first random access resource configuration and/or the second random access resource configuration.

7. The method of claim 6, wherein the first usage rule comprises at least one of:
a rule 1: determining the random access resource configuration based on the contention-free random access resource configuration in the first random access resource configuration;
a rule 2: determining the random access resource configuration based on at least one of: the contention-free random access resource configuration in the first random access resource configuration, or at least a portion of the contention-based random access resource configuration in the first random access resource configuration;
a rule 3: determining the random access resource configuration based on all of random access resource configurations in the first random access resource configuration and/or all of random access resource configurations in the second random access resource configuration;
a rule 4: determining the random access resource configuration based on at least one of: the contention-free random access resource configuration in the first random access resource configuration, at least a portion of the contention-based random access resource configuration in the first random access resource configuration, or a random access resource configuration corresponding to a first specific function in the second random access resource configuration; or
a rule 5: determining the random access resource configuration based on at least one of: the contention-free random access resource configuration in the first random access resource configuration, or a random access resource configuration corresponding to a first specific function in the second random access resource configuration.

8. The method of claim 7, wherein the first specific function comprises at least one of:
a specific function supported by the UE;
a specific function specified by the network device; or
a specific function agreed in a protocol.

9. The method of claim 4 or 5, wherein determining the usage rule for random access resource configurations in response to the UE triggering the random access process comprises:
determining a second usage rule for random access resource configurations in response to the UE triggering a contention-based random access process;
wherein determining the random access resource configuration based on the usage rule comprises:
determining the random access resource configuration based on the second usage rule from the first random access resource configuration and/or the second random access resource configuration.

10. The method of claim 9, wherein the second usage rule comprises at least one of:
a rule 6: determining the random access resource configuration based on all of random access resource configurations in the first random access resource configuration in response to the contention-based random access process being triggered by a function other than the specific function;
a rule 7: determining the random access resource configuration based on all of random access resource configurations in the first random access resource configuration and/or a random access resource configuration corresponding to a first specific function in the second random access resource configuration in response to the contention-based random access process being triggered by a function other than the specific function;
a rule 8: determining the random access resource configuration based on a random access resource configuration corresponding to a second specific function in the second random access resource configuration in response to the contention-based random access process being triggered by a specific function, wherein the second specific function is the specific function that triggers the contention-based random access process; or
a rule 9: determining the random access resource configuration based on a random access resource configuration corresponding to a second specific function in the second random access resource configuration and/or at least a portion of random access resource configurations in the first random access resource configuration in response to the contention-based random access process being triggered by a specific function, wherein the second specific function is the specific function that triggers the contention-based random access process.

11. The method of claim 10, wherein the first specific function comprises at least one of:
a specific function supported by the UE;
a specific function specified by the network device; or
a specific function agreed in a protocol.

12. The method of any one of claims 4-11, wherein the contention-based random access resource configuration comprises at least one of:
a contention-based two-step random access resource configuration; or
a contention-based four-step random access resource configuration.

13. The method of any one of claims 4-11, wherein the contention-free random access resource configuration comprises at least one of:
a contention-free two-step random access resource configuration; or
a contention-free four-step random access resource configuration.

14. A method for determining a random access resource configuration, performed by a network device, comprising:
determining a usage rule for random access resource configurations in response to a user equipment (UE) triggering a random access process; and
determining a random access resource configuration based on the usage rule, and performing random access based on the random access resource configuration.

15. The method of claim 14, further comprising:
sending a first random access resource configuration and/or a second random access resource configuration to the UE; wherein the first random access resource configuration and the second random access resource configuration each comprise at least one random access resource configuration; and each random access resource configuration in the second random access resource configuration corresponds to one specific function.

16. The method of claim 15, wherein the specific function comprises at least one of:
a reduced capability (RedCap) function;
a small data transmission (SDT) function;
a coverage enhancement (CovEnh) function; or
a slicing function.

17. The method of claim 15, wherein the first random access resource configuration comprises at least one of:
a contention-based random access resource configuration;
a contention-free random access resource configuration; or
a system information-request random access resource configuration.

18. The method of claim 15, wherein the second random access resource configuration comprises a contention-based random access resource configuration.

19. The method of claim 17 or 18, wherein determining the usage rule for random access resource configurations in response to the UE triggering the random access process comprises:
determining a first usage rule for random access resource configurations in response to the UE triggering a contention-free random access process;
wherein determining the random access resource configuration based on the usage rule comprises:
determining the random access resource configuration based on the first usage rule from the first random access resource configuration and/or the second random access resource configuration.

20. The method of claim 19, wherein the first usage rule comprises at least one of:
a rule 1: determining the random access resource configuration based on the contention-free random access resource configuration in the first random access resource configuration;
a rule 2: determining the random access resource configuration based on at least one of: the contention-free random access resource configuration in the first random access resource configuration, or at least a portion of the contention-based random access resource configuration in the first random access resource configuration;
a rule 3: determining the random access resource configuration based on all of random access resource configurations in the first random access resource configuration and/or all of random access resource configurations in the second random access resource configuration;
a rule 4: determining the random access resource configuration based on at least one of: the contention-free random access resource configuration in the first random access resource configuration, at least a portion of the contention-based random access resource configuration in the first random access resource configuration, or a random access resource configuration corresponding to a first specific function in the second random access resource configuration; or
a rule 5: determining the random access resource configuration based on at least one of: the contention-free random access resource configuration in the first random access resource configuration, or a random access resource configuration corresponding to a first specific function in the second random access resource configuration.

21. The method of claim 20, wherein the first specific function comprises at least one of:
a specific function supported by the UE;
a specific function specified by the network device; or
a specific function agreed in a protocol.

22. The method of claim 17 or 18, wherein determining the usage rule for random access resource configurations in response to the UE triggering the random access process comprises:
determining a second usage rule for random access resource configurations in response to the UE triggering a contention-based random access process;
wherein determining the random access resource configuration based on the usage rule comprises:
determining the random access resource configuration based on the second usage rule from the first random access resource configuration and/or the second random access resource configuration.

23. The method of claim 22, wherein the second usage rule comprises at least one of:
a rule 6: determining the random access resource configuration based on all of random access resource configurations in the first random access resource configuration in response to the contention-based random access process being triggered by a function other than the specific function;
a rule 7: determining the random access resource configuration based on all of random access resource configurations in the first random access resource configuration and/or a random access resource configuration corresponding to a first specific function in the second random access resource configuration in response to the contention-based random access process being triggered by a function other than the specific function;
a rule 8: determining the random access resource configuration based on a random access resource configuration corresponding to a second specific function in the second random access resource configuration in response to the contention-based random access process being triggered by a specific function, wherein the second specific function is the specific function that triggers the contention-based random access process; or
a rule 9: determining the random access resource configuration based on a random access resource configuration corresponding to a second specific function in the second random access resource configuration and/or at least a portion of random access resource configurations in the first random access resource configuration in response to the contention-based random access process being triggered by a specific function, wherein the second specific function is the specific function that triggers the contention-based random access process.

24. The method of claim 23, wherein the first specific function comprises at least one of:
a specific function supported by the UE;
a specific function specified by the network device; or
a specific function agreed in a protocol.

25. The method of any one of claims 17-24, wherein the contention-based random access resource configuration comprises at least one of:
a contention-based two-step random access resource configuration; or
a contention-based four-step random access resource configuration.

26. The method of any one of claims 17-24, wherein the contention-free random access resource configuration comprises at least one of:
a contention-free two-step random access resource configuration; or
a contention-free four-step random access resource configuration.

27. An apparatus for determining a random access resource configuration, comprising:
a determining module, configured to determine a usage rule for random access resource configurations in response to a user equipment, UE, triggering a random access process; and
a random access module, configured to determine a random access resource configuration based on the usage rule, and perform random access based on the random access resource configuration.

28. An apparatus for determining a random access resource configuration, comprising:
a determining module, configured to determine a usage rule for random access resource configurations in response to a user equipment (UE) triggering a random access process; and
a configuring module, configured to determine a random access resource configuration based on the usage rule, and perform random access based on the random access resource configuration.

29. A communication device, comprising a processor and a memory having a computer program stored thereon, wherein the processor is configured to execute the computer program to cause the communication device to perform the method of any of claims 1 to 13.

30. A communication device, comprising a processor and a memory having a computer program stored thereon, wherein the processor is configured to execute the computer program to cause the communication device to perform the method of any of claims 14 to 26.

31. A communication device, comprising: a processor and an interface circuit; wherein,
the interface circuit is configured to receive code instructions and transmit the code instructions to the processor; and
the processor is configured to run the code instructions to perform the method of any one of claims 1 to 13.

32. A communication device, comprising: a processor and an interface circuit; wherein,
the interface circuit is configured to receive code instructions and transmit the code instructions to the processor; and
the processor is configured to run the code instructions to perform the method of any one of claims 14 to 26.

33. A computer-readable storage medium having instructions stored thereon, wherein when the instructions are executed, the method of any of claims 1 to 13 is performed.

34. A computer-readable storage medium having instructions stored thereon, wherein when the instructions are executed, the method of any of claims 14 to 26 is performed.
